(19) **Europäisches Patentamt / European Patent Office / Office européen des brevets**

(11) **EP 3 582 438 B1**

(12) **EUROPEAN PATENT SPECIFICATION**

(45) Date of publication and mention
of the grant of the patent:
**07.02.2024 Bulletin 2024/06**

(21) Application number: **18178048.7**

(22) Date of filing: **15.06.2018**

(51) International Patent Classification (IPC):
**H04L 41/0896** (2022.01)    **H04L 43/0894** (2022.01)
**H04L 47/125** (2022.01)    H04L 43/0864 (2022.01)
H04L 47/41 (2022.01)

(52) Cooperative Patent Classification (CPC):
**H04L 43/0894; H04L 47/125;** H04L 43/0864;
H04L 47/41

(54) **COMMON CAPACITY RATIO FOR A PLURALITY OF COMMUNICATION LINKS**

GEMEINSAMES KAPAZITÄTSVERHÄLTNIS FÜR MEHRERE
KOMMUNIKATIONSVERBINDUNGEN

RAPPORT DE CAPACITÉ COMMUNE POUR UNE PLURALITÉ DE LIAISONS DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.12.2019 Bulletin 2019/51**

(73) Proprietor: **Nokia Solutions and Networks Oy
02610 Espoo (FI)**

(72) Inventors:
• **DE VLEESCHAUWER, Danny
2018 Antwerpen (BE)**

• **DE SCHEPPER, Koen A. E.
2018 Antwerpen (BE)**
• **TSIAFLAKIS, Paschalis
2018 Antwerp (BE)**

(74) Representative: **IP HILLS NV
Hubert Frère-Orbanlaan 329
9000 Gent (BE)**

(56) References cited:
**WO-A1-2017/102683    US-A1- 2008 267 068**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

Among others, various example embodiments relate to the determination of a configurable common capacity ratio between upstream and downstream communication channels, wherein the common capacity ratio is common for a plurality of communication links.

### Background

A communication link may provide a total capacity that is to be shared by a downstream and upstream communication channel available on that communication link. The apportionment of this total capacity may further be configurable by a ratio between the capacity of the upstream and downstream communication channel. In certain applications, this ratio is only configurable for a plurality of communication links, i.e. this configurable ratio is common for all the communication links.

An example application is G.fast as specified in ITU-T G.9700 and G.9701 that employs synchronous time-division multiplexing, TDD, to separate downstream and upstream transmission. A single parameter then defines the number of discrete multi-tone, DMT, symbols that are allocated for vectored downstream transmission versus the number of DMT symbols that are allocated for vectored upstream transmission during a certain predetermined time interval. This parameter is thus common for all communication links, i.e. all the vectored lines. Other example applications are rate steering wherein link rates are distributed among different users, or the dynamic redistribution of downstream and upstream rates in multi-user duplex applications.

WO2017102683A1 discloses a communication controller configured to control TDD communications over a plurality of subscriber lines making use of a common TDD frame structure. The common TDD frame structure comprising a total number N of transmission slots per TDD frame, a first number NDS of which are configured for downstream communications over the subscriber lines and a second number Nus of which are configured for upstream communications over the subscriber lines. In accordance with an embodiment of the invention, the communication controller is further configured to receive traffic measurements (NDS,MEAS, NUS,MEAS, QLDS,MEAS, QLUS,MEAS, QIDS,MEAS, QIUS,MEAS, QEDS,MEAS, QEUS,MEAS) performed over the respective subscriber lines, to determine a first target number NDS,TAR of downstream transmission slots per TDD frame and a second target number Nus,TAR of upstream transmission slots per TDD frame to be sustained over the subscriber lines from the traffic measurements, and to adjust the first number NDS and the second number Nus of transmission slots based on the so-determined first and second target numbers NDS,TAR and Nus,TAR. The present invention also relates to a method for controlling TDD communications over a plurality of subscriber lines.

### Summary

It is an object, among others, of the present disclosure to provide a solution for determining an optimal common capacity ratio and for configuring the communication links accordingly.

Thereto, according to a first example aspect of the present disclosure, a communication controller is disclosed comprising means for performing:

- Estimating, for an upcoming time slot, expected amounts of upstream and downstream traffic flows on respective communication links having configurable upstream and downstream capacities by means of a common capacity ratio for the communication links; and
- determining, for the upcoming time slot, based on the expected amounts of upstream and downstream traffic flows, a desired common capacity ratio for which expected upstream and downstream ingress rates of the communication links will converge to a working point according to an apportionment of the upstream and downstream capacities to the respective expected amounts of upstream and downstream traffic flows;

and wherein the determining the desired common capacity ratio further comprises:

- defining a utility function that depends on the expected amounts of upstream and downstream traffic flows, and on the common capacity ratio; and

determining the desired common capacity ratio as the common capacity ratio for which the utility function is maximized.

The desired common capacity ratio is thus not merely determined to accommodate the observed ingress rates or even to accommodate the evolution of the observed ingress rates. The above communication controller is first estimating the amount of traffic flows on the communication links. Thereupon the controller apportions the capacities according to the estimated traffic flows in such a way that the ingress rates converge, i.e., such that the ingress rates converge to a working point that complies with a fair apportionment if the expected amounts of traffic flows would remain constant.

The above determination of the common capacity ratio has the advantage that starvation of traffic flows is prevented because a fair apportionment to the different traffic flows is taken into account. Starvation of flows may occur because of rate adaptation techniques applied by source nodes. Because of this, the observed ingress rates are not always a good indicator for the fair apportionment of the capacity to the different communication links.

A traffic flow may be understood as a collection of packets that are sent from a certain source node to a certain destination node. Optionally, packets of a flow may specify how they should be treated. Source, destination and treatment may be provided in various ways. The source and destination node may for example be defined by the packet's source and destination address, e.g. an Internet Protocol (IP) address. Source and destination may also be defined more specifically by both the network and transport protocol address, e.g. by the IP address and TCP or UDP port number. The way the traffic flow is to be treated may further be specified by DiffServ Code Points (DSCP) as specified in RFC 2474 or by any other means for specifying a service class of a traffic flow.

The amount of expected traffic flows may be estimated in different ways. For example, the amount may be estimated by directly inspecting the protocol fields that define the traffic flows, more specifically by counting the amount of combinations of such fields, e.g. the combinations of source address and port number, destination address and port number, and the value of the service class field.

Alternatively, when the above combinations are not always directly observable or obtainable, the estimating the expected amounts of upstream and downstream traffic flows may further comprise:

- obtaining active queue management, AQM, probabilities applied to the upstream and downstream traffic flows by respective AQM controllers; and
- deriving the expected amounts of upstream and downstream traffic flows from a traffic model relating, for a communication link, the respective upstream and downstream traffic ingress rates of the communication link to the amount of respective upstream and downstream traffic flows on the communication link and to the AQM probabilities applied to the respective upstream and downstream traffic flows.

The above approach has the advantage that deep packet inspection is not required. Moreover, this approach also works for encrypted traffic flows where deep packet inspection is even not possible.

The ingress rates may be directly available or obtainable. Alternatively, the respective upstream and downstream traffic ingress rates may be determined by:

- obtaining a change in upstream and downstream queue occupancies of the communication link during a previous time interval; and/or obtaining corresponding upstream and downstream egress rates of the communication link; and
- estimating the upstream and downstream traffic ingress rates of the communication link from the obtained change in upstream and downstream queue occupancies and/or from the upstream and downstream egress rates.

According to example embodiments, the communication controller further comprises means for configuring the configurable upstream and downstream capacities of the communication links according to the desired common capacity ratio.

In other words, the desired common capacity ratio is directly applied to the communication links. Thereupon, the respective ingress rates will converge according to the established working point associated to the fair apportionment.

Advantageously, communication controller is part of a communication equipment that further comprises AQM controllers comprising means for performing active queue management, AQM, by determining independently upstream and downstream AQM probabilities for the communication links.

In other words, the AQM controllers independently control the upstream and downstream AQM probabilities but the common capacity ratio is set according to the determined desired common capacity ratio. Upon configuring the common capacity ratio, the AQM controllers will adapt their AQM probabilities indirectly because of the changing link characteristics and, hence, the upstream and downstream ingress rates of the communication links will change accordingly. As the common capacity ratio takes into account the amounts of traffic flow, the ratio between the upstream and downstream AQM probabilities will implicitly steer the ingress rates towards the determined working point.

If supported by the AQM controllers, the communication controller may further comprise means for providing the configured upstream and downstream capacities to the respective AQM controllers.

According to example embodiments, the communication controller further comprises means for providing joint AQM controllers with the desired common capacity ratio for further apportioning, by a joint AQM controller and for a communication link, a total AQM probability to upstream and downstream AQM probabilities based on the desired common capacity ratio.

A joint AQM controller is an AQM controller which does not determine upstream and downstream AQM probabilities independently from each other. In other words, a joint AQM controller operates according to a total AQM probability and apportions this total probability to the upstream and downstream channels. By supplying the desired common capacity ratio to such a joint AQM controller, the joint AQM controller may determine the AQM probabilities based on this ratio which, on its turn, will result in ingress rates according to the apportionment.

Such joint AQM controllers for performing active queue management, AQM, and the communication controller may further be part of a communication equipment. The joint AQM controllers then further comprise means for performing:

- determining the total AQM probability for the communication link; and
- determining the upstream and downstream AQM probability based on the total AQM probability for the communication link.

Advantageously, the joint AQM controller further comprises means for performing the apportioning based on the desired common capacity ratio and amounts of upstream and downstream traffic flows.

According to embodiments, the communication equipment further comprises a physical layer controller for configuring communication interfaces of the respective communication lines, the physical layer controller further comprising means for:

- determining an actual common capacity ratio for accommodating observed upstream and downstream ingress rates; and
- configuring the configurable upstream and downstream capacities of the communication links according to the actual common capacity ratio.

In other words, the common capacity ratio is determined by only considering the observed upstream and downstream ingress rates. Nevertheless, as the ingress rates are a result of the AQM probabilities set by the joint AQM controllers and, therefore, a result of the determined desired common capacity ratio, the common capacity ratio will be indirectly determined by the apportionment such that the ingress rates converge to the working point.

According to example embodiments the communication links comprise vectored communication lines and the capacity ratio is indicative for an allocation of DMT symbols between downstream and upstream transmission during an upcoming time frame.

According to example embodiments, the communication controller, the AQM controllers, and/or the physical layer controller comprises at least one processor and at least one memory including computer program code, the at least one memory and computer program code configured to, with the at least one processor, cause the performance of the respective communication controller, AQM controllers, and/or physical layer controller.

According to example embodiments, a method is disclosed comprising:

- estimating, for an upcoming time slot, expected amounts of upstream and downstream traffic flows on respective communication links having configurable upstream and downstream capacities by means of a common capacity ratio for the communication links; and
- determining, for the upcoming time slot, based on the expected amounts of upstream and downstream traffic flows a desired common capacity ratio for which expected upstream and downstream ingress rates of the communication links will converge to a working point according to an apportionment of the upstream and downstream capacities to the respective expected amounts of upstream and downstream traffic flows;

and wherein the determining the desired common capacity ratio further comprises:

- defining a utility function that depends on the expected amounts of upstream and downstream traffic flows, and on the common capacity ratio; and
- determining the desired common capacity ratio as the common capacity ratio for which the utility function is maximized.

## Brief Description of the Drawings

Some example embodiments will now be described with reference to the accompanying drawings.

Fig. 1 illustrates an example embodiment of a communication system comprising a plurality of communication lines connected to upstream and downstream communication equipment; and

Fig. 2 shows a plot with the relation between downstream and upstream ingress rates of the communication links, and the relation between downstream and upstream capacities of the communication links; and

Fig. 3 illustrates steps performed for determining a desired common capacity ratio according to example embodiments; and

Fig. 4 illustrates steps performed for configuring a communication system based on a desired common capacity ratio according to example embodiments; and

Fig. 5 illustrates steps performed for configuring a communication system based on a desired common capacity ratio according to example embodiments; and

Fig. 6 illustrates a computing system suitable for performing various steps according example embodiments.

## Detailed Description of Embodiments

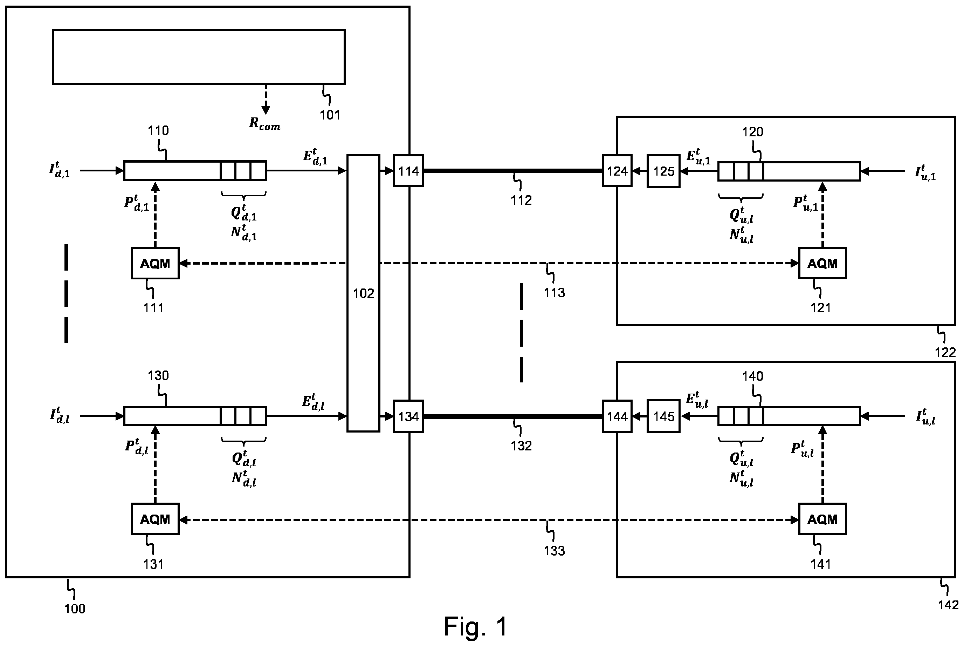

Various example embodiments relate to the determination of a desired common capacity ratio between upstream and downstream communication channels, wherein the common capacity ratio is common for a plurality of communication links. Fig. 1 illustrates an example embodiment of a communication system wherein the communication links may correspond to vectored digital subscriber lines 112, 132. The lines 112, 132 connect subscribers 122, 142 with a communication equipment, e.g. a Digital Subscriber Line Access Multiplier 100, DSLAM. Upstream and downstream allocation may then be performed by synchronous time-division multiplexing, TDD. The terms upstream and downstream indicate opposite directions of communication over a communication link wherein upstream typically indicates the direction from the subscriber to the access provider and downstream from the access provider towards the subscriber. Communication controller 101 is configured to determine the desired common capacity ratio $R_{com}$. For synchronous TDD, $R_{com}$ may define the number of discrete multi-tone, DMT, symbols that are allocated for vectored downstream transmission versus the number of DMT symbols that are allocated for upstream transmission during a certain predetermined time interval. This parameter is thus common for all communication links, i.e. all the vectored lines. The G.fast communication protocol as specified in ITU-T G.9700 and G.9701 employs such synchronous time-division multiplexing to separate downstream and upstream transmission. A TDD frame may for example consist out of 22 or 35 DMT symbols that are allocatable for either downstream or upstream communication. Data for downstream and upstream transmission may be buffered in respective queues 110, 120 and 130, 140. The queues are further managed by Active Queue Management, AQM, controllers 111, 121, 131, 141. An AQM controller determines a marking or dropping probability that is applied to data packets in the respective queues. The marking or dropping probability will further be referred to as the AQM probability. Alternatively, AQM controllers 121, 141 may also be located in communication equipment 100. In such a case, the status of queues 120, 140 for performing AQM control is communicated from the respective subscribers 122, 142 to the communication equipment 100, i.e., over a control channel 113, 133.

Communication equipment 100 may further comprise a common logic component 102 for performing joint processing for the communication across the different communication links. To this respect logic component 102 may correspond to a baseband processor for performing baseband processing on communication signals. Logic component 102 may be used for both the pre-processing of downstream communication signals and the post-processing of received upstream communication signals. Logic component 102 may also perform other physical layer functions such as the determining and the configuring of the upstream and downstream capacities of the various communication links. Similarly, the subscribers 122, 142 may comprise baseband processing logic 125, 145 for the pre-processing of upstream communication signals according and for configuring configurations received from the communication equipment 102. To further describe the example embodiments the following variables as also shown in Fig. 1 are defined:

- $I_{x,l}^t$ is the number of bits arriving in direction $x$ on the $l$-th communication link during time slot $t$, i.e. the ingress rate multiplied by the slot length;

- $C_{x,l}^t$ is the number of bits that can be transported in direction $x$ on the $l$-th link during time slot $t$, i.e. the link rate multiplied by the slot length or, shortly, the capacity;

- $E_{x,l}^t$ is the number of bits that are effectively transported in direction $x$ on the $l$-th link during time slot $t$, i.e. the egress rate multiplied by the slot length;

- $Q_{x,l}^t$ is the number of bits in the buffer in direction $x$ on the $l$-th link at the start of a time slot $t$, i.e., the queue occupancy;

- $P_{x,l}^t$ is the dropping or marking probability, i.e. the AQM probability, in direction $x$ on the $l$-th link during slot $t$; and

- $N_{x,l}^t$ is the amount of traffic flows sending in direction $x$ on the $l$-th link during time slot $t$;

wherein the subscript $x$ may take the value $u$ indicative for an upstream direction and the value $d$ indicative for the downstream direction. The subscript $l$ ($\in \{1, 2, ..., L\}$) indicates that the variable pertains to the $l$-th of $L$ communication links, e.g. vectored DSL links 112 to 132 of Fig. 1. The superscript t indicates to which time slot the variable pertains, i.e., to a certain period of time.

The controller 101 determines the desired common capacity ratio $R_{com}$ such that all ingress rates at the different queues are accommodated for. At the start of a time slot $t + 1$, the controller 101 may then make a decision about the common capacity ratio for that upcoming time slot based on an estimation of the ingress rates, ( $\hat{I}_{d,l}^{t+1}, \hat{I}_{u,l}^{t+1}$ ), for that upcoming slot, thereby determining the link rates ( $C_{d,l}^{t+1}, C_{u,l}^{t+1}$ ) of all communication links during the next time slot. In other words, by configuring the common capacity ratio at the beginning of time slot $t + 1$, the link rates ( $C_{d,l}^t, C_{u,l}^t$ ) for that slot are determined based on the expected ingress rates ( $\hat{I}_{d,l}^{t+1}, \hat{I}_{u,l}^{t+1}$ ) for that time slot. It should be noted that the symbol $\hat{X}^t$ indicates an estimation for $X^t$ for a time slot $t$.

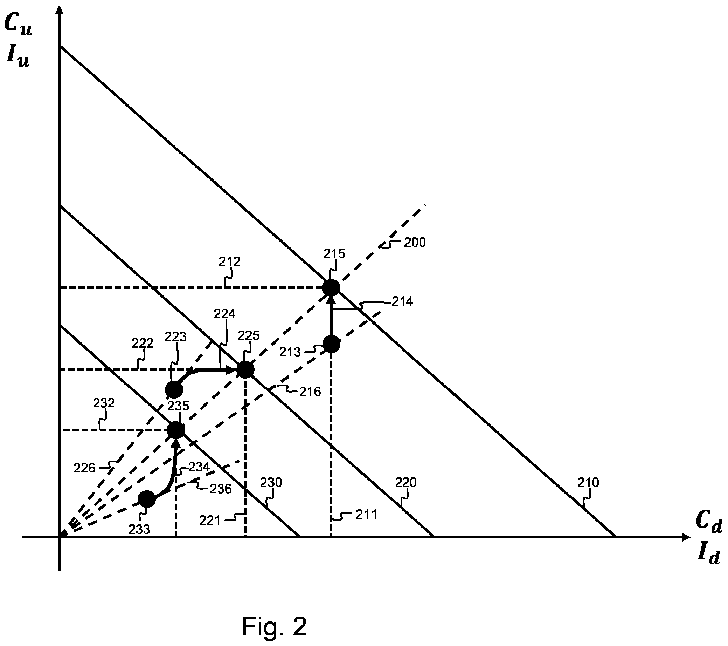

As the AQM controllers also steer the ingress rates, there is a coupling between the configured common capacity ratio and the AQM dropping probabilities. Fig. 2 illustrates this coupling for a simplified situation with three communication links. Lines 210, 220 and 230 are capacity lines per communication link. These lines describe the trade-off in downstream and upstream capacity on the respective communication links, which is governed by the equation $C_{d,l} + C_{u,l} = C_{tot,l}$, wherein $C_{tot,l}$ is the total capacity of the communication link $l$. The line 200 indicates the allocation of the downstream and upstream capacity for all lines. The slope of line 200 is determined by the configured common capacity ratio and is also referred to as the common capacity line 200. The intersection of common capacity line 200 with the capacity lines 210, 220, 230 determines the downstream and upstream link rates ( $C_{d,l}^t, C_{u,l}^t$ ) on the respective communication links, graphically represented by the respective dots 215, 225, 235.

AQM aware sources such as end-points that communicate according to the TCP transport protocol determine how much data a source may transmit based on feedback from an AQM controller, i.e., under the form of dropped or marked packets. When there is an underload on a communication link, i.e., when $I_{d,l}^t \leq C_{d,l}^t$ and $I_{u,l}^t \leq C_{d,l}^t$, then the respective points ( $I_{d,l}^t, I_{u,l}^t$ ), indicated by the dots 213, 223, 233, reside inside the shape determined by ( $C_{d,l}^t, C_{u,l}^t$ ), i.e. to the left of respective lines 211, 221, 231 and below respective lines 212, 222, 232. When there is such an underload, the transport protocol will makes the offered ingress rates increase proportional to the amount of sources, i.e., $\frac{d(I_{d,l}^t, I_{u,l}^t)}{dt} \sim (N_{d,l}^t, N_{u,l}^t)$ (wherein $\frac{dX}{dt}$ designates the time derivative of $X$). As soon as the upstream or downstream channel gets overloaded, a queue will start to build up and the associated AQM controller will react by sending a congestion signal to sources on that channel in order to reduce the transmission rates. When the AQM controller operates according to an AQM algorithm such as PIE (proportional integral enhanced) or PI2 (proportional integral squared), then it is ensured that the ingress traffic rapidly converges to the available capacity without too much fluctuations, while keeping the delay defined as $\frac{Q_{x,l}^t}{C_{x,l}^t}$ under control. When the AQM algorithms in the downstream and upstream communication channel operate independently from each other, then, once there is an overload in either the upstream or downstream direction, the AQM controller will keep the ingress rate in that direction around that corresponding capacity, i.e., $I_{x,l}^t \approx C_{x,l}^t$, while in the other direction there is still an increase. Fig. 2 illustrates this behaviour by the movement directions 214, 224, 234 wherein the respective ingress rates ( $I_{d,l}^t, I_{u,l}^t$ ), move towards the respective dots 215, 225, 235 with coordinates ( $C_{d,l}^t, C_{u,l}^t$ ). The movements 214, 224, 234 are first along the respective lines 216, 226, 236 and then along either respective lines 211, 221, 231.

Controller 101 determines a desired value for the common capacity rate during a next time interval, i.e. $R_{com}$,

that can accommodate all expected ingress rates. Referring to Fig. 2, controller 101 determines the desired slope of the common capacity line 200. This slope, on its turn, determines the desired capacities that are to be configured on the respective communication links. When the ingress rates coincide with the capacity rate a working point is reached, i.e. the controller 101 keeps the desired common capacity ratio unchanged and the AQM controllers do no longer change the ingress rates. Different choices for the desired common capacity ratio at the different time slots may result in a different working point. However, not all working points are desirable. For example, at a certain working point, some flows on some communication links may have starved. The description below describes how to converge to an optimal working point wherein traffic flows are not starved.

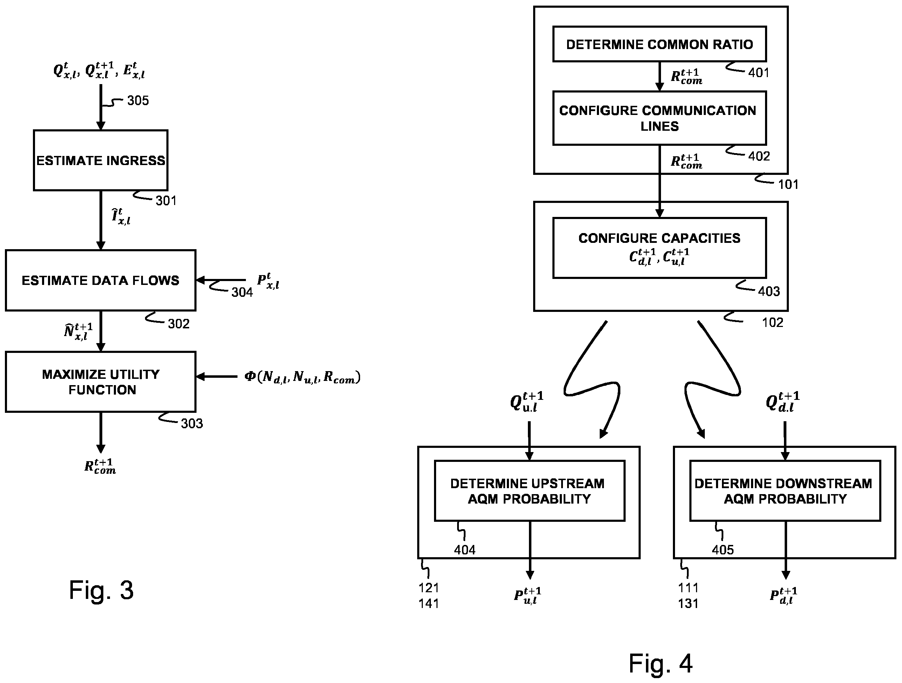

Controller 101 is configured to perform various steps to determine the desired common capacity ratio $R_{com}^{t+1}$ at the end of a time slot for a next time slot and configures the communication system accordingly to arrive at a working point where traffic flows are not starved. Fig. 3 illustrates steps performed by the controller 101 to determine this desired common capacity ratio according to an example embodiment.

In a step 302, controller 101 estimates the expected amount of traffic flows $N_{x,l}^{t+1}$ in the queues 110, 120, 130, 140 during the next time slot t + 1, further referred to as $\widehat{N}_{x,l}^{t+1}$. Such estimation may be performed by relying on a traffic model. Several traffic models are known in the art, among which that the ingress rate is inversely proportional to the AQM probability raised to a power. When all sources are assumed to follow the rules, the ingress rate may be estimated by the following equation:

$$I_{x,l} = C \cdot N_{x,l} \cdot \left(P_{x,l}\right)^{-\eta} \quad \text{(Eq. 1)}$$

wherein

- C is a constant mainly determined by the round-trip time, RTT; and
- $\eta$ is a parameter depending on the type of TCP transport layer protocol used for adapting the sent rate according to the AQM; e.g., $\eta$ = 0.5 for TCP RENO controlled by a tail-drop or PIE AQM, and $\eta$ = 1 for DCTCP (datacenter TCP) and TCP RENO controlled by PI2 AQM; $\eta$ usually ranges between 0 and 1 wherein $\eta$ = 0 is applicable to the case where there is no AQM based adjustment such as for UDP traffic.

Assuming that $\eta$ and C are the same for all sources, the expected amount of traffic flows may be estimated as follows:

$$\widehat{N}_{x,l}^{t+1} = \frac{\left(P_{x,l}^{t+1}\right)^{\eta} \cdot \hat{I}_{x,l}^{t+1}}{C} \cong \frac{\left(P_{x,l}^{t}\right)^{\eta} \cdot \hat{I}_{x,l}^{t}}{C} \quad \text{(Eq. 2)}$$

It is not guaranteed that each source will adhere to the traffic model of Eq. 1. For example, there may also be UDP flows or the exponent $\eta$ and constant C may be different in a certain direction on a certain link. To account for this, the obtained estimation $\widehat{N}_{x,l}^{t+1}$ may further be capped to a predefined maximum $N_{max}$.

When using Eq. 2 for estimating the amount of traffic flows, an estimation of the ingress rates $\hat{I}_{x,l}^{t}$ is needed. The ingress rates may be measurable or obtainable from the respective queues. In this case, the estimation is the measurement, i.e. $\hat{I}_{x,l}^{t} = I_{x,l}^{t}$. In some cases, the ingress rates may not be available, but the egress rates and buffer occupancies are. To estimate the ingress rates based on the buffer occupancies and egress rates, as illustrated in the optional step 301, the buffer evolution during a time slot on a communication link in a particular direction may be defined as $Q_{x,l}^{t+1} = max\{Q_{x,l}^{t} + I_{x,l}^{t} - C_{x,l}^{t}, 0\}$. By using the equality $max\{c + a, c + b\} = c + max\{a, b\}$ and $max\{-a, -b\}$ = $-min\{a, b\}$, the buffer evolution may be rewritten as $Q_{x,l}^{t+1} = Q_{x,l}^{t} + I_{x,l}^{t} - E_{x,l}^{t}$ wherein

$$E_{x,l}^t = min\{C_{x,l}^t, \; Q_{x,l}^t + I_{x,l}^t\} \text{ or, differently, } E_{x,l}^t = C_{x,l}^t \text{ if } Q_{x,l}^{t+1} > 0 \text{ and } E_{x,l}^t = I_{x,l}^t + Q_{x,l}^t \text{ if } Q_{x,l}^{t+1} = 0$$

. This results in the following equation for determining the ingress rate:

$$I_{x,l}^t = E_{x,l}^t + Q_{x,l}^{t+1} - Q_{x,l}^t \text{ (Eq. 3)}$$

In the next step 303, the desired common capacity ratio is determined such that a maximum fairness is achieved for the estimated amount of flows. To this end, a utility function $\Phi$ is defined that is to be maximized and which depends on the amount of flows $N_{d,l}$, $N_{u,l}$ and the common capacity ratio $R_{com}$:

$$\Phi = f(N_{d,l}, N_{u,l}, R_{com}) \text{ (Eq. 4)}$$

For example, when applying this to a synchronous time-division multiplexing access network where a TDD frame consists out of 35 DMT symbols, the following utility function may be defined:

$$\Phi = \sum_{l=1}^{L} \left( w_{d,l} \cdot N_{d,l} \cdot \frac{\left( \frac{\left(\frac{Mds}{35}\right) \cdot C_{tot,l}}{N_{d,l}} \right)^{1-\alpha}}{1-\alpha} + w_{u,l} \cdot N_{u,l} \cdot \frac{\left( \frac{\left(1-\frac{Mds}{35}\right) \cdot C_{tot,l}}{N_{u,l}} \right)^{1-\alpha}}{1-\alpha} \right) \text{ (Eq. 5)}$$

wherein

- $\alpha$ is a positive parameter indicative for the shape of the utility function $\Phi$ and may be selected freely depending on the use case;
- $w_{x,l}$ is a positive weighting factor and may be selected freely depending on the use case;
- $Mds$ defines the amount of DMT symbols allocated to vectored downstream transmission versus the amount of DMT symbols allocated to vectored upstream transmission, i.e., the DMT symbols with an index smaller than or equal to the Mds value are used for downstream transmission, while the others are used for upstream transmission; $Mds$ is thus a specific measure of the common capacity ratio for the synchronous TDD application.

This utility $\Phi$ is maximized for

$$Mds_f = \frac{\left( \sum_{l=1}^{L} \left( \Phi_{tot,l} \cdot w_{d,l} \cdot \left( \frac{N_{d,l}}{N_{tot,l}} \right)^\alpha \right) \right)^{1/\alpha}}{\left( \sum_{l=1}^{L} \left( \Phi_{tot,l} \cdot w_{d,l} \cdot \left( \frac{N_{d,l}}{N_{tot,l}} \right)^\alpha \right) \right)^{1/\alpha} + \left( \sum_{l=1}^{L} \left( \Phi_{tot,l} \cdot w_{u,l} \cdot \left( \frac{N_{u,l}}{N_{tot,l}} \right)^\alpha \right) \right)^{1/\alpha}} \cdot 35 \qquad \text{(Eq. 6)}$$

wherein

$$\Phi_{tot,l} = N_{tot,l} \cdot \frac{\left( \frac{C_{tot,l}}{N_{tot,l}} \right)^{1-\alpha}}{1-\alpha} \qquad \text{(Eq. 7)}$$

is the utility on the l-th link in case the sum of all flows (i.e., $N_{tot,l} = N_{d,l} + N_{u,l}$) would all have the same (fair) rate.

Optionally, an additional restriction may be applied by forcing that the common capacity ratio has to lie between certain bounds [$Mds_{min}$, $Mds_{max}$]. In such a case, the capacity ratio may be obtained as:

$$Mds_b = \min\left( \max\left( Mds_f, Mds_{min} \right), Mds_{max} \right) \qquad \text{(Eq. 8)}$$

By the above equations Eq. 6 to Eq. 8 the *Mds* value that maximizes fairness among the amount of expected flows may be obtained, i.e., the desired common capacity ratio $R_{com}^{t+1} = Mds/35$ for the next time interval.

Fig. 4 illustrates, according to an embodiment, further steps performed for configuring the communication system of Fig. 1 based on the determined desired common capacity $R_{com}^{t+1}$, e.g. as determined by the steps described with reference to Fig. 3. When performing the step according to Fig. 4, the communication system of Fig. 1 comprises independent AQM controllers 111, 121, 131, 141 for the upstream and downstream channels. Independent AQM controllers are AQM controllers configured to perform active queue management, AQM, by determining independently upstream and downstream AQM probabilities for the communication links.

The first steps 401 and 402 may be performed by communication controller 101 wherein the first step corresponds to the determination of the desired common capacity ratio $R_{com}^{t+1}$ for a next time interval t + 1. In the next step 402, the communication controller 101 configures the communication lines 112, 132 according to the desired common capacity ratio. This may for example be done by providing the desired capacity ratio to the baseband controller 102. Baseband controller 102 then derives for each communication link the upstream and downstream capacities $C_{d,l}^{t+1}, C_{u,l}^{t+1}$ i.e. $C_{d,l}^{t+1} \sim R_{com}^{t+1}$ and $C_{u,l}^{t+1} \sim (1 - R_{com}^{t+1})$ which are further used to configure the physical layer logic 114, 124, 134, 144 of the communication equipment 100 and subscriber equipments 122, 142.

Because of the adapted capacities of the communication links, the throughput on the communication links will change, and, consequently, the upstream and downstream queue occupancies $Q_{u.l}^{t+1}$ and $Q_{d.l}^{t+1}$ will change. The change in capacity will therefore indirectly influence the AQM controllers 121, 141 and 111, 131 that will adapt, as shown in steps 404 and 405, the upstream and downstream AQM probabilities $P_{u,l}^{t+1}$ and $P_{d,l}^{t+1}$ resulting in updated upstream and downstream ingress rates $I_{u,l}^{t+1}$ and $I_{d,l}^{t+1}$ as already determined by the utility function of equation (Eq. 5) and (Eq. 6):

$$I_{d,l} = \left(\frac{Mds_b}{35}\right) \cdot C_{tot,l} \qquad \text{(Eq. 9)}$$

$$I_{u,l} = \left(1 - \frac{Mds_b}{35}\right) \cdot C_{tot,l} \qquad \text{(Eq. 10)}$$

In other words, the dynamic allocation of the capacities in step 403 according to the desired common capacity ration acts as a master control for achieving a fair allocation of the capacities to the different traffic flows. The independent AQM controllers than depend on this master control and will follow accordingly by determining the AQM probabilities such that the fair allocation of the ingress rates to the different traffic flows is actually achieved.

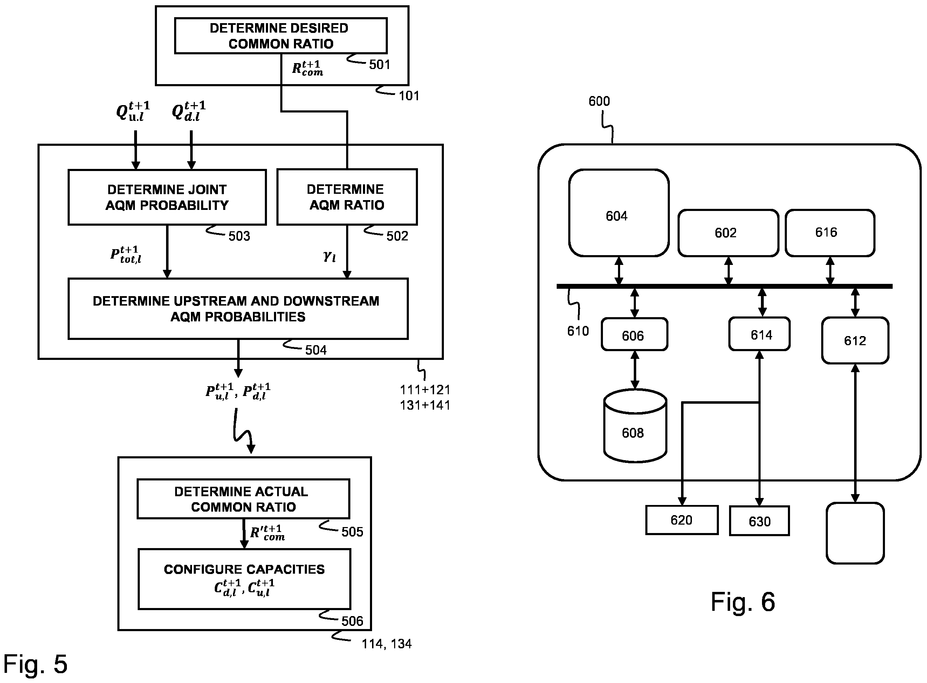

Fig. 5 illustrates, according to an alternative embodiment, further steps performed for configuring the communication system of Fig. 1 based on the determined desired common capacity $R_{com}^{t+1}$, e.g. as determined by the steps described with reference to Fig. 3. In this case, the communication system of Fig. 1 comprises a joint AQM controller, i.e., the upstream AQM controllers 121, 141 and downstream AQM controllers 111, 131 do not independently determine the upstream and downstream AQM probabilities $P_{u,l}^{t+1}$ and $P_{d,l}^{t+1}$, but operate according to a joint or total AQM probability $P_{tot,l}^{t+1}$ for each communication link. The fact that the AQM controllers operate jointly is illustrated in Fig. 1 by the dashed line 113, 133 representing the joint operation of the AQM controllers. In Fig. 5 the joint AQM controllers for respective communication lines 112 and 132 are represented by respective references 111+121 and 131+141 thereby indicating the joint operation of respective AQM controller 111 and 121, and 131 and 141.

The joint AQM controllers determine the joint AQM probability $P_{tot,l}^{t+1}$ in step 503, from both the queue occupancies $Q_{u.l}^{t+1}$ and $Q_{d.l}^{t+1}$. This may be done by applying an AQM on a virtual queue of which the queue occupancy is a combination of the upstream and downstream queue occupancies. As queue occupancy of the virtual queue the sum

$Q_{d.l}^{t+1} + Q_{u.l}^{t+1}$ or the maximum $max(Q_{d.l}^{t+1}, Q_{u.l}^{t+1})$ of the downstream and upstream occupancy may be used. The respective upstream a downstream AQM probabilities $P_{u,l}^{t+1}$ and $P_{d,l}^{t+1}$ are then determined in the step 504 from the join AQM probability as:

$$P_{d,l} = \gamma_l \cdot P_{tot,l} \quad \text{(Eq. 11)}$$

$$P_{u,l} = \frac{P_{tot,l}}{\gamma_l} \quad \text{(Eq. 12)}$$

The ratio $\gamma_l$ for a communication link is determined in a step 502 from the desired common capacity ratio $R_{com}^{t+1}$ such that a fair convergence of the ingress rates is obtained according to the optimized utility function of equation (Eq. 6) and (Eq.7). This may be done by considering the ratios between the upstream and downstream ingress rates according to the traffic flow model of equation (Eq. 1):

$$\frac{I_{d,l}}{I_{u,l}} = \frac{N_{d,l}}{N_{u,l}} \cdot \left(\frac{P_{d,l}}{P_{u,l}}\right)^{-\eta} \text{(Eq. 12)}$$

wherein the ratio of the ingress rates is determined by the maximized utility thereby obtaining:

$$\frac{P_{d,l}}{P_{u,l}} = \left(\frac{Mds_b}{35-Mds_b} \cdot \frac{N_{u,l}}{N_{d,l}}\right)^{-1/\eta} = (\gamma_l)^2 \quad \text{(Eq. 13)}$$

In other words, the ratio $\gamma_l$ may be determined from $Mds_b$ or, for the more general case, from $R_{com}^{t+1}$. By steps 501 to 504, the joint AQM controllers act as a master controller for achieving the fair apportionment of the upstream and downstream ingress rates according to the estimated amount of traffic flow. The actual capacities for the communication lines $C_{d,l}^{t+1}, C_{u,l}^{t+1}$ are then set by baseband controller 102 according to the observed ingress rates as controlled by the joint AQM controllers as shown in steps 505. In other words, the desired common capacity ratio is not directly applied to determine the actual capacities of the communication links. Instead, the desired common capacity ratio is used to determine the joint AQM probability for the joint AQM controller. The capacities $C_{d,l}^{t+1}, C_{u,l}^{t+1}$ are then determined according to steps 505, 506 from the observed ingress rates.

Determining the $C_{d,l}^{t+1}, C_{u,l}^{t+1}$ from the observed ingress rates may be performed according to methods which are known in the art. Such methods are for example disclosed by M. Kuipers in "G.fast: cDTA Emulation Results", ITU SG15 report, Q4/15-C16 (170403), April 2017 and by M. Kuipers in "G.fast: Additional cDTA Emulation Results", ITU SG15 report, SG15-C.392, June 2017 and in WO2017102683(A1). These methods accommodate the ingress rates as follows. As long as the sum of the expected downstream and upstream ingress rates $\hat{I}_{d,l}^{t+1}, \hat{I}_{u,l}^{t+1}$ on the $l$-th communication link are below the link capacity $C_{tot,l}$ i.e., if $\hat{I}_{d,l}^{t} + \hat{I}_{u,l}^{t} \le C_{tot,l}$, an interval is determined on the capacity line, delimited by the points ( $C_{tot,l} - \hat{I}_{d,l}^{t}, \hat{I}_{d,l}^{t}$ ) and ( $\hat{I}_{u,l}^{t}, C_{tot,l} - \hat{I}_{u,l}^{t}$ ), inside which each point represents capacity combinations for the $l$-th communication link that can accommodate the offered ingress traffic on that link. When no interval exists, the capacities may be set according to a pre-determined default common capacity ratio.

The above utility function of equation (Eq. 5) introduced a shape parameter $\alpha$ and weighting factors $w_{x,l}$. Below, these parameters and factors are discussed in more detail to show how they influence the characteristics of the working point.

Influence of the shape parameter $\alpha$

If $\alpha \to 1$, Eq. 6 reduces to

$$Mds_f = \frac{\sum_{l=1}^{L}\left(w_{d,l} \cdot N_{d,l}\right)}{\sum_{l=1}^{L}\left(w_{d,l} \cdot N_{d,l}\right) + \sum_{l=1}^{L}\left(w_{u,l} \cdot N_{u,l}\right)} \cdot 35$$

wherein it is assumed that $N_{tot,l}^{C_{tot,l}}$ (and hence $N_{tot,l}^{\Phi_{tot,l}}$ ) is the same one each communication link (or any difference is absorbed in the weights $w_{x,l}$), so that, in this case the optimal $Mds_f$ depends on a weighted average over all communication links of the amount of sources in downstream and upstream direction.

if $\alpha \to \infty$, Eq. 6 reduces to

$$Mds_f = \frac{\max\limits_{l}\left(\frac{N_{d,l}}{C_{tot,l}}\right)}{\max\limits_{l}\left(\frac{N_{d,l}}{C_{tot,l}}\right) + \max\limits_{l}\left(\frac{N_{u,l}}{C_{tot,l}}\right)} \cdot 35 = \frac{\min\limits_{l}\left(\frac{C_{tot,l}}{N_{u,l}}\right)}{\min\limits_{l}\left(\frac{C_{tot,l}}{N_{d,l}}\right) + \min\limits_{l}\left(\frac{C_{tot,l}}{N_{u,l}}\right)} \cdot 35$$

so that, if the shape parameter $\alpha$ is large enough, the weights $w_{x,l}$ no longer have an impact on the optimal $Mds_f$.

Equal weights

In this case $w_{x,l} = 1$ for $x \in \{d, u\}$ and $l = 1, 2, ...,L$. While for $\alpha \to 1$, the weighted sum of flow throughputs is maximized, for $\alpha \to \infty$ the minimum per-flow throughput considering some weights is maximized. For values of $\alpha$ between those values, there is a trade-off between those two. For the case that the total available capacity on the links is ($C_{tot,1}$, $C_{tot,2}$, $C_{tot,3}$) = (5.4, 5.8, 6.2)x100Mbps and the number of flows on the links are ($N_{d,1}$, $N_{d,2}$, $N_{d,3}$) = (4, 7, 6) and ($N_{u,1}$, $N_{u,2}$, $N_{u,3}$) = (10,8,2), Table 1 below illustrates the corresponding per-flow rates in units of 100Mbps.

Table 1

| $\alpha$ | Downstream flow rate | | | Upstream flow rate | | | |
|---|---|---|---|---|---|---|---|
| | Link 1 | Link 2 | Link 3 | Link 1 | Link 2 | Link 3 | Minimum flow rate |
| 0.01 | 0.6952 | 0.4267 | 0.5321 | 0.2619 | 0.3517 | 1.5037 | 0.2619 |
| 1 | 0.6203 | 0.3807 | 0.4748 | 0.2919 | 0.3919 | 1.6757 | 0.2919 |
| 2 | 0.5808 | 0.3565 | 0.4446 | 0.3077 | 0.4131 | 1.7663 | 0.3077 |
| 10 | 0.5370 | 0.3296 | 0.4110 | 0.3252 | 0.4366 | 1.8669 | 0.3252 |
| 100 | 0.5329 | 0.3271 | 0.4079 | 0.3268 | 0.4388 | 1.8763 | 0.3268 |

Weights inversely proportional to the amount of flows

In this case $w_{x,l} = \dfrac{1}{N_{x,l}}$ for $x \in \{d, u\}$ and $l = 1, 2, ..., L$. While for $\alpha \to 1$, all links are split half for downstream and half for upstream, for $\alpha \to \infty$ the minimum per-flow throughput is maximized. For values of $\alpha$ between those values, there is a trade-off between those two. For the case that the total available capacity on the links is ($C_{tot,1}$, $C_{tot,2}$, $C_{tot,3}$) = (5.4, 5.8, 6.2)x100Mbps and the number of flows on the links are ($N_{d,1}$, $N_{d,2}$, $N_{d,3}$) = (4, 7, 6) and ($N_{u,1}$, $N_{u,2}$, $N_{u,3}$) = (10,8,2), Table 2 below illustrates the corresponding per-flow rates in units of 100Mbps..

Table 2

| $\alpha$ | Downstream flow rate | | | Upstream flow rate | | | |
|---|---|---|---|---|---|---|---|
| | Link 1 | Link 2 | Link 3 | Link 1 | Link 2 | Link 3 | Minimum flow rate |
| 1 | 0.6750 | 0.4143 | 0.5167 | 0.2700 | 0.3625 | 1.5500 | 0.2700 |
| 2 | 0.6416 | 0.3938 | 0.4911 | 0.2834 | 0.3804 | 1.6267 | 0.2834 |
| 10 | 0.5489 | 0.3369 | 0.4201 | 0.3205 | 0.4302 | 1.8397 | 0.3205 |
| 100 | 0.5341 | 0.3278 | 0.4088 | 0.3264 | 0.4382 | 1.8737 | 0.3264 |

Diversifying downstream and upstream weights

In this case $w_{d,l} = \theta / N_{d,l}$ and $w_{u,l} = 1 / N_{u,l}$ for $l$ = 1, 2, ..., L, with $\theta \in [0,1]$, wherein, in a particular direction, the weights are still inversely proportional to the amount of flows. While for $\alpha \to 1$, all links are split with a downstream to upstream ratio equal to $\theta$, for $\alpha \to \infty$ the minimum per-flow throughput is maximized. For values of $\alpha$ between those values, there is a trade-off between those two. For the case that the total available capacity on the links is $(C_{tot,1}, C_{tot,2}, C_{tot,3})$ = (5.4, 5.8, 6.2)x100Mbps and the number of flows on the links are $(N_{d,1}, N_{d,2}, N_{d,3})$ = (4, 7, 6) and $(N_{u,1}, N_{u,2}, N_{u,3})$ = (10,8,2), and $\theta$ = 4. Table 3 below illustrates the corresponding per-flow rates in units of 100Mbps.

Table 3

| $\alpha$ | DS flow rate | | | US flow rate | | | |
|---|---|---|---|---|---|---|---|
| | Link 1 | Link 2 | Link 3 | Link 1 | Link 2 | Link 3 | Min flow rate |
| 1 | 1.0800 | 0.6629 | 0.8267 | 0.1080 | 0.1450 | 0.6200 | 0.1080 |
| 2 | 0.8698 | 0.5339 | 0.6658 | 0.1921 | 0.2579 | 1.1026 | 0.1921 |
| 10 | 0.5945 | 0.3649 | 0.4551 | 0.3022 | 0.4057 | 1.7348 | 0.3022 |
| 100 | 0.5385 | 0.3305 | 0.4122 | 0.3246 | 0.4358 | 1.8634 | 0.3246 |

From the above examples it may be observed that the working point associated with setting $\alpha$ very large is best in terms of avoiding starvation. No matter how the weights are chosen, it maximizes the minimum throughput allocated to the flows. The working point associated with setting the weights inversely proportional to the amount of flows and diversified in downstream and upstream $w_{d,l} = \theta / N_{d,l}$ and $w_{u,l} = 1 / N_{u,l}$ and for $l$ = 1, 2, ..., L, with $\theta \in$ [0,1] and $\alpha \to 1$ is the case wherein rates are configured according to default downstream and upstream link rates. Hence, if the weights are set inversely proportional to the amount of flows and diversified in downstream and upstream with a parameter $\theta$, the choice of the parameter $\alpha$, allows to tune from a working point that maximizes the minimum flow rate fairness to a working point that is comparable to a fixed default Mds value.

Fig. 6 shows a suitable computing system 600 according to an example embodiment. Computing system 600 comprises means for performing the steps according to the above example embodiments. Computing system 600 may therefore be used as suitable implementation of controller 101, 111, 121, 131, 141, 102. Computing system 600 may in general be formed as a suitable general-purpose computer and comprise a bus 610, a processor 602, a local memory 604, a communication interface 612, storage element interface 606 and one or more storage elements 608. Bus 610 may comprise one or more conductors that permit communication among the components of the computing system 600. Processor 602 may include any type of conventional processor or microprocessor that interprets and executes programming instructions. Local memory 604 may include a random-access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator to input information to the computing device 600, such as a keyboard 620, a mouse 630, a pen, voice recognition and/or biometric mechanisms, etc. Output interface 616 may comprise one or more conventional mechanisms that output information to the operator, such as a display 640, etc. Communication interface 612 may comprise any transceiver-like mechanism such as for example one or more Ethernet interfaces that enables computing system 600 to communicate with other devices and/or systems. The communication interface 612 of computing system 600 may be connected to such another computing system by means of a local area network (LAN) or a wide area network (WAN) such as for example the internet. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example SATA disk drives, and control the reading and writing of data to and/or from these storage elements 608. Although the storage elements 608 above is described as a local disk, in general any other suitable computer-readable media such as a removable magnetic disk, optical storage media such as a CD or DVD, -ROM disk, solid state drives, flash memory cards, ... may be used.

Although the present invention has been illustrated by reference to specific embodiments, it will be apparent to those skilled in the art that the invention is not limited to the details of the foregoing example embodiments, and that the present invention may be embodied with various changes and modifications without departing from the scope of the claims. The present embodiments are therefore to be considered in all respects as illustrative and not restrictive, the scope of the invention being indicated by the appended claims rather than by the foregoing description.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions.

**Claims**

1. A communication controller (101) comprising means for performing:

   - estimating (302), for an upcoming time slot, expected amounts of upstream and downstream traffic flows ( $\widehat{N}_{x,l}^{t+1}$ ) on respective communication links (112, 113) having configurable upstream and downstream capacities ( $C_{d,l}^{t+1}, C_{u,l}^{t+1}$ ) by means of a common capacity ratio for the communication links; and
   - determining (303), for the upcoming time slot, based on the expected amounts of upstream and downstream traffic flows ( $\widehat{N}_{x,l}^{t+1}$ ), a desired common capacity ratio ( $R_{com}^{t+1}$ ) for which expected upstream and downstream ingress rates ( $\widehat{I}_{x,l}^{t+1}$ ) of the communication links will converge to a working point according to an apportionment ($\Phi$) of the upstream and downstream capacities to the respective expected amounts of upstream and downstream traffic flows;

   and wherein the determining the desired common capacity ratio further comprises:

   - defining a utility function that depends on the expected amounts of upstream and downstream traffic flows, and on the common capacity ratio; and
   - determining the desired common capacity ratio as the common capacity ratio for which the utility function is maximized.

2. The communication controller (101) according to claim 1 wherein the utility function expresses a fairness in the apportionment of the upstream and downstream capacities.

3. The communication controller (101) according to claim 1 or 2 wherein the estimating (302) the expected amounts of upstream and downstream traffic flows ( $\widehat{N}_{x,l}^{t+1}$ ) further comprises:

   - obtaining (304) active queue management, AQM, probabilities ( $P_{x,l}^t$ ) applied to the upstream and downstream traffic flows by respective AQM controllers (111, 121, 131, 141); and

   - deriving (302) the expected amounts of upstream and downstream traffic flows ( $\widehat{N}_{x,l}^{t+1}$ ) from a traffic model relating, for a communication link, the respective upstream and downstream traffic ingress rates ( $\hat{I}_{x,l}^{t}$ ) of the communication link to the amount of respective upstream and downstream traffic flows on the communication link and to the AQM probabilities applied to the respective upstream and downstream traffic flows.

4. The communication controller (101) according to claim 3 wherein the estimating (302) the expected amounts of upstream and downstream traffic flows ( $\widehat{N}_{x,l}^{t+1}$ ) further comprises:

   - obtaining (305) a change in upstream and downstream queue occupancies ( $Q_{x,l}^{t}$, $Q_{x,l}^{t+1}$ ) of the communication link during a previous time interval; and/or obtaining (305) corresponding upstream and downstream egress rates ( $E_{x,l}^{t}$ ) of the communication link; and

   - estimating (301) the upstream and downstream traffic ingress rates ( $\hat{I}_{x,l}^{t+1}$ ) of the communication link from the obtained change in upstream and downstream queue occupancies and/or the upstream and downstream egress rates.

5. The communication controller (101) according to any one of the preceding claims further comprising means for performing:

   - configuring (403) the configurable upstream and downstream capacities ( $C_{d,l}^{t+1}$, $C_{u,l}^{t+1}$ ) of the communication links according to the desired common capacity ratio ( $R_{com}^{t+1}$ ).

6. A communication equipment (100) comprising the communication controller (101) according to claim 5, and comprising AQM controllers (111, 121, 131, 141) comprising means for performing active queue management, AQM, by determining independently upstream and downstream AQM probabilities for the communication links.

7. The communication equipment (100) according to claim 6 wherein the communication controller (101) further comprises means for providing the configured upstream and downstream capacities ( $C_{d,l}^{t+1}$, $C_{u,l}^{t+1}$ ) to the respective AQM controllers (111, 121, 131, 141).

8. The communication controller (101) according to any one of claims 1 to 4 further comprising means for providing joint AQM controllers (111+121, 131+141) with the desired common capacity ratio ( $R_{com}^{t+1}$ ) for further apportioning, by a joint AQM controller and for a communication link, a total AQM probability ( $P_{tot,l}^{t+1}$ ) to upstream and downstream AQM probabilities ( $P_{u,l}^{t+1}$, $P_{d,l}^{t+1}$ ) based on the desired common capacity ratio ( $R_{com}^{t+1}$ ).

9. Communication equipment (100) comprising:

   - the communication controller according to claim 8; and
   - the joint AQM controllers (111, 131) for performing active queue management, AQM,

   and wherein the joint AQM controller further comprises means for performing:

   - determining (503) the total AQM probability ( $P_{tot,l}^{t+1}$ ) for the communication link; and
   - determining (504) the upstream and downstream AQM probability $P_{u,l}^{t+1}$, $P_{d,l}^{t+1}$ based on the total AQM probability $P_{tot,l}^{t+1}$ for the communication link.

10. The communication equipment (100) according to claim 9 wherein the joint AQM controller further comprises means for performing the apportioning (502) based on the desired common capacity ratio ( $R_{com}^{t+1}$ ) and amounts of upstream and downstream traffic flows.

**11.** The communication equipment (100) according to any one of claims 9 or 10 comprising a physical layer controller (102) for configuring communication interfaces of the respective communication lines, the physical layer controller further comprising means for:

- determining (505) an actual common capacity ratio ($R'^{t+1}_{com}$) for accommodating observed upstream and downstream ingress rates; and

- configuring (506) the configurable upstream and downstream capacities ($C^{t+1}_{d,l}, C^{t+1}_{u,l}$) of the communication links according to the actual common capacity ratio ($R^{t+1}_{com}$).

**12.** The communication controller (101) or communication equipment (100) according to any one of the preceding claims wherein the communication links (112, 132) comprise vectored communication lines and the capacity ratio is indicative for an allocation of DMT symbols between downstream and upstream transmission during an upcoming time frame.

**13.** A method comprising:

- estimating (302), for an upcoming time slot, expected amounts of upstream and downstream traffic flows ($\widehat{N}^{t+1}_{x,l}$) on respective communication links (112, 113) having configurable upstream and downstream capacities ($C^{t+1}_{d,l}, C^{t+1}_{u,l}$) by means of a common capacity ratio for the communication links; and
- determining (303), for the upcoming time slot, based on the expected amounts of upstream and downstream traffic flows ($\widehat{N}^{t+1}_{x,l}$), a desired common capacity ratio ($R^{t+1}_{com}$) for which expected upstream and downstream ingress rates ($\hat{I}^t_{x,l}$) of the communication links will converge to a working point according to an apportionment ($\Phi$) of the upstream and downstream capacities to the respective expected amounts of upstream and downstream traffic flows;

and wherein the determining the desired common capacity ratio further comprises:

- defining a utility function that depends on the expected amounts of upstream and downstream traffic flows, and on the common capacity ratio; and
- determining the desired common capacity ratio as the common capacity ratio for which the utility function is maximized.

**Patentansprüche**

**1.** Kommunikationssteuerung (101), die Mittel zum Durchführen von Folgendem umfasst:

- Schätzen (302) von erwarteten Mengen von stromaufwärtigen und stromabwärtigen Verkehrsflüssen ($\widehat{N}^{t+1}_{x,l}$) für einen bevorstehenden Zeitschlitz auf jeweiligen Kommunikationsverbindungen (112, 113) mit auslegbaren stromaufwärtigen und stromabwärtigen Kapazitäten ($C^{t+1}_{d,l}, C^{t+1}_{u,l}$) mittels eines gemeinsamen Kapazitätsverhältnisses für die Kommunikationsverbindungen; und

- Bestimmen (303) eines gewünschten gemeinsamen Kapazitätsverhältnisses ($R^{t+1}_{com}$), für das erwartete stromaufwärtige und stromabwärtige Eingangsraten ($\hat{I}^{t+1}_{x,l}$) der Kommunikationsverbindungen gemäß einer Aufteilung (Φ) der stromaufwärtigen und stromabwärtigen Kapazitäten auf die jeweiligen erwarteten Mengen von stromaufwärtigen und stromabwärtigen Verkehrsflüssen zu einem Arbeitspunkt konvergieren, für den bevorstehenden Zeitschlitz auf Basis der erwarteten Mengen von stromaufwärtigen und stromabwärtigen Verkehrsflüssen ($\widehat{N}^{t+1}_{x,l}$);

und wobei das Bestimmen des gewünschten gemeinsamen Kapazitätsverhältnisses ferner Folgendes umfasst:

- Definieren einer Nutzenfunktion, die von den erwarteten Mengen von stromaufwärtigen und stromabwärtigen Verkehrsflüssen sowie vom gemeinsamen Kapazitätsverhältnis abhängig ist; und
- Bestimmen des gewünschten gemeinsamen Kapazitätsverhältnisses als das gemeinsame Kapazitätsverhältnis, für das die Nutzenfunktion maximiert ist.

2. Kommunikationssteuerung (101) nach Anspruch 1, wobei die Nutzenfunktion eine Fairness bei der Aufteilung der stromaufwärtigen und stromabwärtigen Kapazitäten ausdrückt.

3. Kommunikationssteuerung (101) nach Anspruch 1 oder 2, wobei das Schätzen (302) der erwarteten Mengen von stromaufwärtigen und stromabwärtigen Verkehrsflüssen ( $\widehat{N}_{x,l}^{t+1}$ ) ferner Folgendes umfasst:

- Erhalten (304) von aktiven Warteschlangenverwaltungs(AQM)-Wahrscheinlichkeiten ( $P_{x,l}^{t}$ ), die von jeweiligen AQM-Steuerungen (111, 121, 131, 141) auf die stromaufwärtigen und stromabwärtigen Verkehrsflüsse angewandt werden; und

- Ableiten (302) der erwarteten Mengen von stromaufwärtigen und stromabwärtigen Verkehrsflüssen ( $\widehat{N}_{x,l}^{t+1}$ ) aus einem Verkehrsmodell, das für eine Kommunikationsverbindung die jeweiligen stromaufwärtigen und stromabwärtigen Verkehrseingangsraten ( $\hat{I}_{x,l}^{t+1}$ ) der Kommunikationsverbindung zur Menge von jeweiligen stromaufwärtigen und stromabwärtigen Verkehrsflüssen auf der Kommunikationsverbindung und zu den AQM-Wahrscheinlichkeiten, die auf die jeweiligen stromaufwärtigen und stromabwärtigen Verkehrsflüsse angewandt werden, in Beziehung setzt.

4. Kommunikationssteuerung (101) nach Anspruch 3, wobei das Schätzen (302) der erwarteten Mengen von stromaufwärtigen und stromabwärtigen Verkehrsflüssen ( $\widehat{N}_{x,l}^{t+1}$ ) ferner Folgendes umfasst:

- Erhalten (305) einer Änderung von stromaufwärtigen und stromabwärtigen Warteschlangenbelegungen ( $Q_{x,l}^{t}, Q_{x,l}^{t+1}$ ) der Kommunikationsverbindung während eines vorherigen Zeitintervalls; und/oder Erhalten (305) von entsprechenden stromaufwärtigen und stromabwärtigen Ausgangsraten ( $E_{x,l}^{t}$ ) der Kommunikationsverbindung; und

- Schätzen (301) der stromaufwärtigen und stromabwärtigen Verkehrseingangsraten ( $\hat{I}_{x,l}^{t+1}$ ) der Kommunikationsverbindung anhand der erhaltenen Änderung von stromaufwärtigen und stromabwärtigen Warteschlangenbelegungen und/oder der stromaufwärtigen und stromabwärtigen Ausgangsraten.

5. Kommunikationssteuerung (101) nach einem der vorhergehenden Ansprüche, die Mittel zum Durchführen von Folgendem umfasst:

- Auslegen (403) der auslegbaren stromaufwärtigen und stromabwärtigen Kapazitäten ( $C_{d,l}^{t+1}, C_{u,l}^{t+1}$ ) der Kommunikationsverbindungen gemäß dem gewünschten gemeinsamen Kapazitätsverhältnis ( $R_{com}^{t+1}$ ).

6. Kommunikationsausrüstung (100), die die Kommunikationssteuerung (101) nach Anspruch 5 sowie AQM-Steuerungen (111, 121, 131, 141) umfasst, die Mittel zum Durchführen einer aktiven Warteschlangenverwaltung, AQM, durch unabhängiges Bestimmen von stromaufwärtigen und stromabwärtigen AQM-Wahrscheinlichkeiten für die Kommunikationsverbindungen umfassen.

7. Kommunikationsausrüstung (100), nach Anspruch 6, wobei die Kommunikationssteuerung (101) ferner Mittel zum Bereitstellen der ausgelegten stromaufwärtigen und stromabwärtigen Kapazitäten ( $C_{d,l}^{t+1}, C_{u,l}^{t+1}$ ) für die entsprechenden AQM-Steuerungen (111, 121, 131, 141) umfasst.

8. Kommunikationssteuerung (101) nach einem der Ansprüche 1 bis 4, die ferner Mittel zum Bereitstellen von gemeinsamen AQM-Steuerungen (111+121, 131+141) mit dem gewünschten gemeinsamen Kapazitätsverhältnis ( $R_{com}^{t+1}$) für eine weitere Aufteilung einer gesamten AQM-Wahrscheinlichkeit ( $P_{tot,l}^{t+1}$ ) auf stromaufwärtige und stromabwärtige AQM-Wahrscheinlichkeiten ( $P_{u,l}^{t+1}, P_{d,l}^{t+1}$ ) auf Basis des gewünschten gemeinsamen Kapazitätsverhältnisses ( $R_{com}^{t+1}$ ) durch eine gemeinsame AQM-Steuerung für eine Kommunikationsverbindung umfasst.

9. Kommunikationsausrüstung (100), die Folgendes umfasst:

- die Kommunikationssteuerung nach Anspruch 8; und
- die gemeinsamen AQM-Steuerungen (111, 131) zum Durchführen einer aktiven Warteschlangenverwaltung, AQM,

und wobei die gemeinsame AQM-Steuerung ferner Mittel zum Durchführen von Folgendem umfasst:

- Bestimmen (503) der gesamten AQM-Wahrscheinlichkeit ( $P_{tot,l}^{t+1}$ ) für die Kommunikationsverbindung; und
- Bestimmen (504) der stromaufwärtigen und stromabwärtigen AQM-Wahrscheinlichkeit $P_{u,l}^{t+1}, P_{d,l}^{t+1}$ auf Basis der gesamten AQM-Wahrscheinlichkeit $P_{tot,l}^{t+1}$ für die Kommunikationsverbindung.

10. Kommunikationsausrüstung (100) nach Anspruch 9, wobei die gemeinsame AQM-Steuerung ferner Mittel zum Durchführen der Aufteilung (502) auf Basis des gewünschten gemeinsamen Kapazitätsverhältnisses ( $R_{com}^{t+1}$ ) und der Mengen von stromaufwärtigen und stromabwärtigen Verkehrsflüssen umfasst.

11. Kommunikationsausrüstung (100) nach einem der Ansprüche 9 oder 10, die eine physische Schichtsteuerung (102) zum Auslegen von Kommunikationsschnittstellen der jeweiligen Kommunikationsleitungen umfasst, wobei die physische Schichtsteuerung ferner Mittel für Folgendes umfasst:

- Bestimmen (505) eines tatsächlichen gemeinsamen Kapazitätsverhältnisses ( $R'^{t+1}_{com}$ ) zum Aufnehmen von beobachteten stromaufwärtigen und stromabwärtigen Eingangsraten; und
- Auslegen (506) der auslegbaren stromaufwärtigen und stromabwärtigen Kapazitäten ( $C_{d,l}^{t+1}, C_{u,l}^{t+1}$ ) der Kommunikationsverbindungen gemäß dem tatsächlichen gemeinsamen Kapazitätsverhältnis ( $R'^{t+1}_{com}$ ).

12. Kommunikationssteuerung (101) oder Kommunikationsausrüstung (100) nach einem der vorhergehenden Ansprüche, wobei die Kommunikationsverbindungen (112, 132) vektorisierte Kommunikationsleitungen umfassen und das Kapazitätsverhältnis eine Zuteilung von DMT-Symbolen zwischen einer stromabwärtigen und einer stromaufwärtigen Übertragung während eines bevorstehenden Zeitframes anzeigt.

13. Verfahren, das Folgendes umfasst:

- Schätzen (302) von erwarteten Mengen von stromaufwärtigen und stromabwärtigen Verkehrsflüssen ( $\widehat{N}_{x,l}^{t+1}$ ) für einen bevorstehenden Zeitschlitz auf jeweiligen Kommunikationsverbindungen (112, 113) mit auslegbaren stromaufwärtigen und stromabwärtigen Kapazitäten ( $C_{d,l}^{t+1}, C_{u,l}^{t+1}$ ) mittels eines gemeinsamen Kapazitätsverhältnisses für die Kommunikationsverbindungen; und
- Bestimmen (303) eines gewünschten gemeinsamen Kapazitätsverhältnisses ( $R_{com}^{t+1}$ ), für das erwartete stromaufwärtige und stromabwärtige Eingangsraten ( $\hat{I}_{x,l}^{t}$ ) der Kommunikationsverbindungen gemäß einer Aufteilung (Φ) der stromaufwärtigen und stromabwärtigen Kapazitäten auf die jeweiligen erwarteten Mengen von stromaufwärtigen und stromabwärtigen Verkehrsflüssen zu einem Arbeitspunkt konvergieren, für den bevorstehenden Zeitschlitz auf Basis der erwarteten Mengen von stromaufwärtigen und stromabwärtigen Verkehrsflüssen ( $\widehat{N}_{x,l}^{t+1}$ );

und wobei das Bestimmen des gewünschten gemeinsamen Kapazitätsverhältnisses ferner Folgendes umfasst:

- Definieren einer Nutzenfunktion, die von den erwarteten Mengen von stromaufwärtigen und stromabwärtigen Verkehrsflüssen sowie vom gemeinsamen Kapazitätsverhältnis abhängig ist; und
- Bestimmen des gewünschten gemeinsamen Kapazitätsverhältnisses als das gemeinsame Kapazitätsverhältnis, für das die Nutzenfunktion maximiert ist.

**Revendications**

1. Dispositif de commande de communication (101) comprenant des moyens pour effectuer :

   - l'estimation (302), pour un créneau horaire à venir, de quantités attendues de flux de trafic amont et aval ( $\widehat{N}_{x,l}^{t+1}$ ) sur des liaisons de communication (112, 113) respectives ayant des capacités amont et aval ( $C_{d,l}^{t+1}, C_{u,l}^{t+1}$ ) configurables au moyen d'un rapport de capacité commune pour les liaisons de communication ; et
   - la détermination (303), pour le créneau horaire à venir, sur la base des quantités attendues de flux de trafic amont et aval ( $\widehat{N}_{x,l}^{t+1}$ ), d'un rapport de capacité commune souhaité ( $R_{com}^{t+1}$ ) pour lequel des débits d'entrée amont et aval ( $\hat{I}_{x,l}^{t+1}$ ) attendus des liaisons de communication convergeront vers un point de fonctionnement selon une répartition ($\phi$) des capacités amont et aval sur les quantités attendues respectives de flux de trafic amont et aval ;

   et dans lequel la détermination du rapport de capacité commune souhaité comprend en outre :

   - la définition d'une fonction d'utilité qui dépend des quantités attendues de flux de trafic amont et aval et du rapport de capacité commune ; et
   - la détermination du rapport de capacité commune souhaité comme rapport de capacité commune pour lequel la fonction d'utilité est maximisée.

2. Dispositif de commande de communication (101) selon la revendication 1, dans lequel la fonction d'utilité exprime une équité dans la répartition des capacités amont et aval.

3. Dispositif de commande de communication (101) selon la revendication 1 ou 2, dans lequel l'estimation (302) des quantités attendues de flux de trafic amont et aval ( $\widehat{N}_{x,l}^{t+1}$ ) comprend en outre :

   - l'obtention (304) de probabilités de gestion de files d'attente active, AQM, ( $P_{x,l}^t$ ) appliquées aux flux de trafic amont et aval par des dispositifs de commande AQM (111, 121, 131, 141) respectifs ; et
   - la dérivation (302) des quantités attendues de flux de trafic amont et aval ( $\widehat{N}_{x,l}^{t+1}$ ) à partir d'un modèle de trafic reliant, pour une liaison de communication, les débits d'entrée de trafic amont et aval ( $\hat{I}_{x,l}^{t+1}$ ) respectifs de la liaison de communication à la quantité de flux de trafic amont et aval respectifs sur la liaison de communication et aux probabilités AQM appliquées aux flux de trafic amont et aval respectifs.

4. Dispositif de commande de communication (101) selon la revendication 3, dans lequel l'estimation (302) des quantités attendues de flux de trafic amont et aval ( $\widehat{N}_{x,l}^{t+1}$ ) comprend en outre :

   - l'obtention (305) d'un changement de l'occupation de files d'attente amont et aval ( $Q_{x,l}^t, Q_{x,l}^{t+1}$ ) de la liaison de communication pendant un intervalle de temps précédent ; et/ou l'obtention (305) de débits de sortie amont et aval ( $E_{x,l}^t$ ) correspondants de la liaison de communication ; et
   - l'estimation (301) des débits d'entrée de trafic amont et aval ( $\hat{I}_{x,l}^{t+1}$ ) de la liaison de communication à partir du changement de l'occupation des files d'attente amont et aval et/ou des débits de sortie amont et aval obtenus.

**5.** Dispositif de commande de communication (101) selon l'une quelconque des revendications précédentes, comprenant en outre des moyens pour effectuer :

- la configuration (403) des capacités amont et aval ( $C_{d,l}^{t+1}, C_{u,l}^{t+1}$ ) configurables des liaisons de communication selon le rapport de capacité commune souhaité ( $R_{com}^{t+1}$ ).

**6.** Équipement de communication (100) comprenant le dispositif de commande de communication (101) selon la revendication 5, et comprenant des dispositifs de commande AQM (111, 121, 131, 141) comprenant des moyens pour effectuer une gestion de files d'attente active, AQM, en déterminant indépendamment des probabilités AQM amont et aval pour les liaisons de communication.

**7.** Équipement de communication (100) selon la revendication 6, dans lequel le dispositif de commande de communication (101) comprend en outre des moyens pour fournir les capacités amont et aval ( $C_{d,l}^{t+1}, C_{u,l}^{t+1}$ ) configurées aux dispositifs de commande AQM (111, 121, 131, 141) respectifs.

**8.** Dispositif de commande de communication (101) selon l'une quelconque des revendications 1 à 4, comprenant en outre des moyens pour fournir à des dispositifs de commande AQM conjoints (111+121, 131+141) le rapport de capacité commune souhaité ( $R_{com}^{t+1}$ ) pour répartir davantage, par un dispositif de commande AQM conjoint et pour une liaison de communication, une probabilité AQM totale ( $P_{tot,l}^{t+1}$ ) sur des probabilités AQM amont et aval ( $P_{u,l}^{t+1}, P_{d,l}^{t+1}$ ) sur la base du rapport de capacité commune souhaité ( $R_{com}^{t+1}$ ).

**9.** Équipement de communication (100) comprenant :

- le dispositif de commande de communication selon la revendication 8 ; et
- les dispositifs de commande AQM conjoints (111, 131) pour effectuer une gestion de files d'attente active, AQM,

et dans lequel le dispositif de commande AQM conjoint comprend en outre des moyens pour effectuer :

- la détermination (503) de la probabilité AQM totale ( $P_{tot,l}^{t+1}$ ) pour la liaison de communication ; et
- la détermination (504) de la probabilité AQM amont et aval ( $P_{u,l}^{t+1}, P_{d,l}^{t+1}$ ) sur la base de la probabilité AQM totale ( $P_{tot,l}^{t+1}$ ) pour la liaison de communication.

**10.** Équipement de communication (100) selon la revendication 9, dans lequel le dispositif de commande AQM conjoint comprend en outre des moyens pour effectuer la répartition (502) sur la base du rapport de capacité commune souhaité ( $R_{com}^{t+1}$ ) et des quantités de flux de trafic amont et aval.

**11.** Équipement de communication (100) selon l'une quelconque des revendications 9 ou 10, comprenant un dispositif de commande de couche physique (102) pour configurer des interfaces de communication des lignes de communication respectives, le dispositif de commande de couche physique comprenant en outre des moyens pour :

- déterminer (505) un rapport de capacité commune réel ( $R'^{t+1}_{com}$ ) pour accueillir des débits d'entrée amont et aval observés ; et
- configurer (506) les capacités amont et aval ( $C_{d,l}^{t+1}, C_{u,l}^{t+1}$ ) configurables des liaisons de communication selon le rapport de capacité commune réel ( $R'^{t+1}_{com}$ ).

**12.** Dispositif de commande de communication (101) ou équipement de communication (100) selon l'une quelconque des revendications précédentes dans lequel les liaisons de communication (112, 132) comprennent des lignes de communication vectorisées et le rapport de capacité est indicatif d'une attribution de symboles DMT entre une transmission aval et amont pendant une trame temporelle à venir.

**13.** Procédé comprenant :

- l'estimation (302), pour un créneau horaire à venir, de quantités attendues de flux de trafic amont et aval ( $\widehat{N}_{x,l}^{t+1}$ ) sur des liaisons de communication (112, 113) respectives ayant des capacités amont et aval ( $C_{d,l}^{t+1}, C_{u,l}^{t+1}$ ) configurables au moyen d'un rapport de capacité commune pour les liaisons de communication ; et
- la détermination (303), pour le créneau horaire à venir, sur la base des quantités attendues de flux de trafic amont et aval ( $\widehat{N}_{x,l}^{t+1}$ ), d'un rapport de capacité commune souhaité ( $R_{com}^{t+1}$ ) pour lequel des débits d'entrée amont et aval ( $\hat{I}_{x,l}^{t}$ ) attendus des liaisons de communication convergeront vers un point de fonctionnement selon une répartition ($\phi$) des capacités amont et aval sur les quantités attendues respectives de flux de trafic amont et aval ;

et dans lequel la détermination du rapport de capacité commune souhaité comprend en outre :

- la définition d'une fonction d'utilité qui dépend des quantités attendues de flux de trafic amont et aval et du rapport de capacité commune ; et
- la détermination du rapport de capacité commune souhaité comme rapport de capacité commune pour lequel la fonction d'utilité est maximisée.

Fig. 1

Fig. 2

EP 3 582 438 B1

Fig. 4

DETERMINE COMMON RATIO 401
$R_{com}^{t+1}$
CONFIGURE COMMUNICATION LINES 402
101
$R_{com}^{t+1}$
CONFIGURE CAPACITIES $C_{d,l}^{t+1}, C_{u,l}^{t+1}$ 403
102

$Q_{d,l}^{t+1}$
DETERMINE DOWNSTREAM AQM PROBABILITY
405
111
131
$P_{d,l}^{t+1}$

$Q_{u,l}^{t+1}$
DETERMINE UPSTREAM AQM PROBABILITY
404
121
141
$P_{u,l}^{t+1}$

Fig. 3

$Q_{x,l}^t, Q_{x,l}^{t+1}, E_{x,l}^t$
305
ESTIMATE INGRESS 301
$\hat{I}_{x,l}^t$

$P_{x,l}^t$
304
ESTIMATE DATA FLOWS 302
$\hat{N}_{x,l}^{t+1}$

$\Phi(N_{d,l}, N_{u,l}, R_{com})$
303
MAXIMIZE UTILITY FUNCTION
$R_{com}^{t+1}$

EP 3 582 438 B1

## Fig. 5

```
┌─────────────────────────────┐
│  DETERMINE DESIRED          │
│  COMMON RATIO               │
│                             │
│              R_com^{t+1}    ⌐ 501
└─────────────────────────────┘
                              ⌐ 101
```

$Q_{u.l}^{t+1}$    $Q_{d.l}^{t+1}$

```
┌──────────────────────────────────────────────┐
│  ┌──────────────────┐   ┌──────────────────┐  │
│  │ DETERMINE JOINT  │   │   DETERMINE      │  │
│  │ AQM PROBABILITY  │   │   AQM RATIO      │  │
│  └──────────────────┘   └──────────────────┘  │
│            ⌐ 503                  ⌐ 502        │
│     P_{tot,l}^{t+1}              γ_l           │
│  ┌────────────────────────────────────────┐   │
│  │  DETERMINE UPSTREAM AND DOWNSTREAM      │   │
│  │  AQM PROBABILITIES                      │   │
│  └────────────────────────────────────────┘   │
│                              ⌐ 504             │
└──────────────────────────────────────────────┘
                                       111+121
        P_{u,l}^{t+1}, P_{d,l}^{t+1}   131+141

┌──────────────────────────────────┐
│  ┌────────────────────────────┐  │
│  │  DETERMINE ACTUAL          │  │
│  │  COMMON RATIO              │  │
│  └────────────────────────────┘  │
│            R'_{com}^{t+1}   ⌐ 505 │
│  ┌────────────────────────────┐  │
│  │  CONFIGURE CAPACITIES      │  │
│  │  C_{d,l}^{t+1}, C_{u,l}^{t+1} │ │
│  └────────────────────────────┘  │
│                            ⌐ 506 │
└──────────────────────────────────┘
                            114, 134
```

## Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017102683 A1

**Non-patent literature cited in the description**

- **M. KUIPERS.** G.fast: cDTA Emulation Results. *ITU SG15 report, Q4/15-C16 (170403),* April 2017

- **M. KUIPERS.** G.fast: Additional cDTA Emulation Results. *ITU SG15 report, SG15-C.392,* June 2017